# EUROPEAN PATENT SPECIFICATION

(11) **EP 3 303 828 B1**
(45) Date of publication and mention of the grant of the patent: **18.03.2020**
(21) Application number: 16735935.5
(22) Date of filing: 01.06.2016
(51) Int. Cl.: B63B 21/26, B63B 21/50, B63B 35/44, F03B 13/22, F03B 15/00, F03B 13/18

(54) **MODULAR PLATFORM FOR OFFSHORE CONSTRUCTIONS WITH A STABILIZED STRUCTURE AND THE RECOVERY OF WATER WAVE ENERGY**
MODULARE PLATTFORM FÜR OFFSHORE-KONSTRUKTIONEN MIT EINER STABILISIERTEN STRUKTUR UND RÜCKGEWINNUNG VON WASSERWELLENENERGIE
PLATE-FORME MODULAIRE POUR CONSTRUCTIONS EN MER AYANT UNE STRUCTURE STABILISÉE ET RÉCUPÉRATION DE L'ÉNERGIE HOULOMOTRICE DE L'EAU

(30) Priority: 02.06.2015 PL 41257815
(43) Date of publication of application: 11.04.2018
(73) Proprietor: Androsiuk, Mariusz, 81-881 Sopot (PL)
(72) Inventor: Androsiuk, Mariusz, 81-881 Sopot (PL)
(86) International application number: PCT/IB2016/053219
(87) International publication number: WO 2016/193922

(56) References cited:
- WO-A1-2014/101369
- GB-A- 2 427 445
- US-A- 4 742 241
- US-A1- 2009 226 331
- US-B1- 7 956 479

## Description

The invention concerns a modular platform for offshore constructions with a stabilized structure and the recovery of water wave energy.

Bodies of water with waves differing in height and length are an immense source of potential energy which is still hardly tapped. Alongside, there is a great demand for finding an economic and simple method of building offshore constructions for residential, transport, or commercial purposes, the latter including warehouses or huge server rooms. The main problem comes down to the production, launching, and maintaining the floating platform on which building structures could be erected in good condition. In economic and technical terms, the most suitable solution used for many years has been a floating concrete tank on which the desired structures are mounted. There are also many modular solutions which employ rigid connections between individual elements. Unfortunately, none of the technical solutions enables simple disassembly of a single damaged floating element set to form a rigid platform. Movement of the whole platform in effect of water wave movement is a disadvantage, too. Another flaw in the known solutions is the need to use specialist hoisting equipment to launch pre-cast concrete modules.

Known from description in patent application US 2014/0152014 A1 is a buoy system which enables generating energy from water wave movement. The buoyancy elements, i.e. they buoys, are combined with a rigid structure which arranges them in a set floating on the waves. The gist of the solution is the base buoy rigidly fixed to the structure which supports the buoyancy of the structure and keeps other free-floating buoys in vertical position. When moving against the structure, the free-floating buoys can generate electrical energy by feeding water to a water turbine or by electromagnetic induction. The solution is developed as a potential source of energy in a floating set and is not suitable for bearing the load of external elements. The structure itself does not enable free dismantling of the buoys, either, because of the adopted solution in which the buoys are connected both under and above water.

Known from description in patent application US 2889795 is a buoyancy structure consisting of hollow cylinders open from the bottom and closed from the top, on which building structures are founded. The stability of the floating structure is achieved through a system which controls air pressure in the cylinders. In this solution, the cylinders are rigidly connected to the platform structure.

Known from description in patent application US 3510892 is a floating platform consisting of a number of elongated cylinders immersed in water and a structure to support the external objects founded thereon, permanently fixed to the cylinders. The cylinders have special rings mounted perpendicular to the cylinder axis, which improve stability of the whole structure.

Known from description in patent application US 2004/0182300 A1 is a concrete module for the building of floating platforms, and the method of its construction. The module is composed of a buoyant material inside and with a concrete coat outside. A system of rigid connections between the modules makes it possible to build larger offshore constructions. The solution enables building modular platforms capable of bearing external loads. There is no possibility to stabilize the structure on water waves and it is hard to dismantle individual modules set in a rigid construction.

Known from description in patent application EP2013076 B1 is a system of connectable floating modules. Buoyancy modules are connected to each other in a rigid floating platform by placing steel connecting elements in the sockets the modules are fitted with. The technical solution does not provide for any possibility of stabilizing the platform structure on water waves.

US 7956479 describes another known system.

The energy obtainable from waves is assessed at 3 TW of power. It is estimated, however, that the current technological advancement would enable obtaining no more than approximately 0.5 TW. Many technological solutions have been developed to convert wave energy to electrical energy. The result substantially depends on the speed and length of the waves, the density of water in the specific basin, and the adopted technological solutions. In simplified terms, the essence of water wave movement is that it is not the water mass itself which moves along the horizontal plane, but the disturbance. For instance, a bottle cork floating on water moves in the vertical plane instead of following the direction of wave propagation. In more detailed terms, every single particle of water moves in closed circles. The proposed solution takes advantage of the energy of water particles which move cyclically in the rhythm of waves and set the buoyancy elements in vertical motion to the same rhythm.
Wave analyses conducted for many years reveal that more than 60% of waves do not exceed the height of 2 meters, and only 8% go higher than 6 meters.
For example, the steepness of waves in the Baltic Sea ranges from 1/10 to 1/15. The waves are usually short. On average, storm waves reach 3 to 4 meters in height and 50-60 meters in length, although there have been exceptions when the waves were higher than 10 meters. In the Puck Bay, on the other hand, the waves stay below 0.5 meter in height due to the shallowness of the basin.
It should be assumed that the proposed technical solution is economically justified for waves of the maximum height of 5 meters and length up to 120 meters. It is not impossible, though, to use much larger buoyancy elements and truss structures which could function properly on waves of a dozen-or-so meters.

For example, in the technical solution based on buoyancy elements 1.5 meter high, the wave reaching 1 meter in height, 10 meters in length and of a 6 second wave period translates to the arrangement of the buoyancy elements every 3 meters. For instance, we could set together 64 buoyancy elements (grid 8 by 8) made of ultra-high performance concrete on the outside (15 mm) and extruded polystyrene on the inside. In the proposed solution, the usable buoyancy of the whole system will exceed 30 tons. With the wave parameters given above, the system is able to pump ca. 740 liters of water /1s, while ensuring full stability of the platform itself.

The gist of the invention is a modular platform for offshore constructions, composed of more than two separate buoyancy elements partially immersed in water, which move along with the water wave movement and which, in the part above water, are connected to the structural elements forming a rigid horizontal spatial structure characterized in that the buoyancy element is given the shape of a cuboid or cylinder having at least one vertical hollow to accommodate the structural element, i.e. piston, which forms the vertical axis along which the buoyancy element moves, and which is connected to the horizontal structural element fitted to take external loads. In the bottom part of the vertical hollow of the buoyancy element water gets inside through a one-way valve in a one-way and free flow. The top part of the vertical hollow is used to anchor the structural element (piston) which is an element of the floating structure. The structural element (piston) is fitted with at least one hollow for the transport of compressed water between the vertical chamber of the buoyancy element and the water receiving element, i.e. water turbine, which is a part of the platform stabilization system and the system of producing electrical energy from the pumped water.
Preferably, the hollow in the structural element (piston) is fitted with a valve (valves) which enables setting an open flow of water at specific pressure and change of its direction.
The floating platform is assembled by launching individual buoyancy elements and connecting them to form a larger spatial structure.
The buoyancy element of a launched platform can be replaced with a new element without the need to disassemble the entire platform. The existing platform can be added extra buoyancy elements to adjust its size to the current demand, and can be fitted with elements anchoring it to the seabed, embankment members, or other floating objects, it can also be equipped with a drive which enables moving of the entire platform.
The spacing between the centerlines of the buoyancy elements set to form a floating platform is larger than twice their diameter or the length of their longest side, and the heights and widths of the buoyancy elements, as well as their spacing in the structural nodes are selected to match the maximum heights and lengths of the waves which form on the specific basin so as to ensure even distribution of load in the nodes between the buoyancy elements floating on wave crests, where the height of the buoyancy element is larger than the theoretical maximum wave height.

The presented technical solution consists in a connectable system of at least three buoyancy elements, i.e. precast modules intended for on-site assembly into a larger platform to hold offshore constructions, with the option of recovering wave energy using the system which stabilizes the platform itself thanks to load distribution between a number of structural nodes, where the buoyancy elements move along the vertical axis of the structural nodes following the movement of water waves, thus causing the pumping of water from the vertical hollows in the buoyancy elements to the water turbine connected to a power generator. Thanks to the proposed spacing between the floats in the connection grid, which is larger than the cylindrical diameter of the buoyancy element, and due to the modular structure of the platform it is possible to replace any damaged buoyancy element without the need to disassemble the entire platform, and hence without the need to tow it to the port and perform costly repair works.
The water turbine could be placed in the vertical element (piston) or outside it and it could serve more than one outlet releasing the pumped water.

The platform stabilization system can be either free, in which case the water wave movement is compensated for by the vertically-moving buoyancy elements, or forced, when the height of the water column in the vertical hollows made in the buoyancy elements is additionally controlled, which determines the position of the vertical structural elements (pistons), and thus translates to controlled stability of the entire platform or its individual buoyancy elements only. The change of the water column in the vertical hollow of the buoyancy element is achieved by controlling the valve opening pressure in the vertical element (piston) and the direction in which it opens, combined with the possibility to pump water from the water turbine to the vertical hollow.

Used in a large scale, the floating element can certainly be made of a high performance or ultra-high performance and watertight concrete, preferably reinforced with glass, basalt, or carbon textiles, or strengthened with dispersed reinforcement or an embedded core of porous material demonstrating low absorption properties, such as expanded polystyrene (EPS) or extruded XPS.
The materials referred to above have been commonly used for years and are easily available in virtually any corner of the world, which is extremely important for separating the production of the floats themselves from the more complicated production of the structural and connecting elements.

The outer coat of the float is made of concrete, and the inside of the float spatial form is filled with a foamed polystyrene core, which prevents it from taking water when the element suffers mechanical damages. Thus, the floating buoyancy element is resistant to the impact of sea water of high salinity and at the same time demonstrates the mechanical strength appropriate for an element designated to take the energy from waves and fitted with a structural system which enables connecting the individual elements to form larger sets, thus making it possible to build a platform on which offshore constructions can be founded. When the floating element moves along the vertical axis following the movement of the waves and floats on the wave crest, water accumulated in the vertical hollow of the float limited with a non-moving vertical element (piston), which is a structural element of the platform, gets compressed. Then, the compressed water is transported through a determined valve opening and via the vertical duct to the receiving element in the form of a water turbine which generates electrical energy. When going down with the movement of waves, the floating element draws water which flows freely through the valve (valves) to the vertical hollow up to the level delimited by the vertical element (piston) of the platform structure. Preferably, the valve (valves) through which the compressed water is transported enables remote setting of the valve opening pressure, and thus makes it possible to control the proper stability of the whole platform which in essence consists of a number of floating elements which change their position in the vertical plane, adjusting to the position of water wave crest and trough. Thus, with the wave movement of water and with the system of a larger number of floats the vertical movement of the platform is compensated for by the movements of the buoyancy elements, where at the same time wave energy is received by using compression of water and its transportation to the receiving element, or using the kinetic energy of the compressed water, or by elevating the water column and employing its potential energy to drive the water turbine, and thus to convert it to electrical energy in the generator.

The platform composed of a set of floats can be fitted with certain elements, such as a rope, for anchoring it to the seabed, embankment members, or other floating elements. The anchoring of the platform does not affect free movement of the buoyancy elements caused by water wave movement.

The buoyancy elements, most preferably in the shape of a cylinder, with edges secured with caps made of amortizing material, could be transported in the late stage of assembly without the need to use specialist equipment, with the strength of a single man sufficient, by e.g. rotating the cylinder up to the launching site.

The spacing between the buoyancy elements connected to form a single platform should guarantee the replacement of an element, if needed, by disconnecting or re-connecting a vertical element of the platform and its free transport among the other buoyancy elements. Preferably, too, the horizontal structures of the floating platform are geometrically configured to form a triangle, rectangle, or hexagon, which ensures the option of expanding the platform by adding new modules and increasing the total area of the structure.
The floating platform can be used in a passive seawater desalination system by founding a translucent structure thereon and pumping water from the buoyancy elements to the container in which the water evaporates in the sun, whereupon the vapor condenses on the structure walls and runs down to a separate container for desalinated water. In addition, the energy recovered from waves could also be used to pump the desalinated water from the floating platform straight to the land, or a vessel.
Due to the stability of the structure on water waves, the floating platform can also be used as a foundation for wind turbines. It would enable to avoid the costly process of laying the foundations in the seabed and erecting a support structure both under and above water. Moreover, so drastic intervention in the natural environment is not always possible. Using the floating platform fitted with the structure stabilization mechanism makes it possible to avoid laying direct foundations for wind turbines. In this way we achieve a rather broad spectrum of applications of the floating platform in the generation of renewable energy at locations were no such possibilities exist today. Particularly advantageous is the use of the floating platform for erecting vertical axis wind turbines thereon of the Darieus or Savonius type.

As far as the structure of the buoyancy elements themselves is concerned, the solution is particularly advantageous if the production of the concrete floats with the foamed polystyrene core is conducted separate from the production of elements which go into the hollow of the float and which form the platform's complete structural system with a module of recovering the wave energy by way of compressing water. In many places around the world concrete elements could be produced nearby the offshore projects in progress as it uses cement, sand, water, and foamed polystyrene, i.e. materials broadly available in the building market. The connecting, pressure, and control elements, on the other hand, would be the only elements delivered to the assembly site.

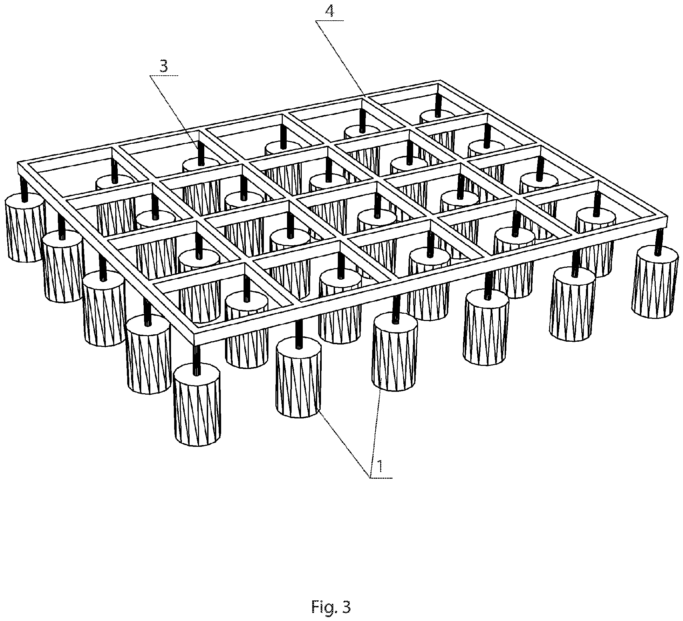

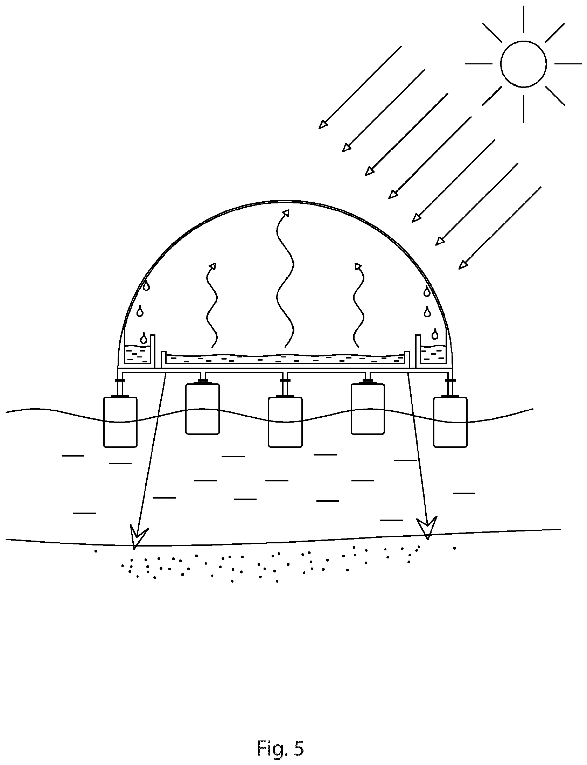

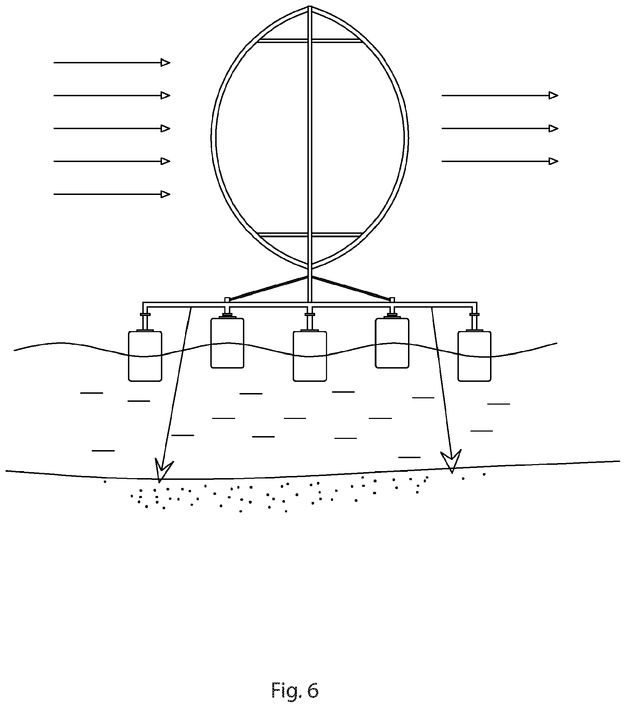

The object of the invention is shown on drawings, where Fig.1 shows the cross-section of two buoyancy elements with a fragment of the horizontal structure, and the mounted water turbine driven by water pumped from the moving buoyancy elements, Fig. 2 shows the cross-section of the floating platform composed of buoyancy elements floating either on wave crests or troughs and bearing the weight of a residential building, Fig. 3 shows a perspective view of the floating platform composed of buoyancy elements and the horizontal structure on which external elements can be mounted, Fig 4 presents the horizontal projection of the floating platforms formed by making rigid structural connections geometrically configured in the shape of a triangle (Fig.4a), rectangular (Fig.4b) and hexagon (Fig.4c), Fig.5 depicts the vertical section of the floating platform with exemplary structure founded thereon, i.e. a seawater desalination facility in which the salty water is pumped from the buoyancy elements to the container in which water evaporates in the sun, whereupon the desalinated water vapor condenses and is stored in a separate container, Fig.6 shows the vertical view of the floating platform with an exemplary vertical axis wind turbine of the Darieus type fixed to the platform's horizontal structure.

### Exemplary embodiment I

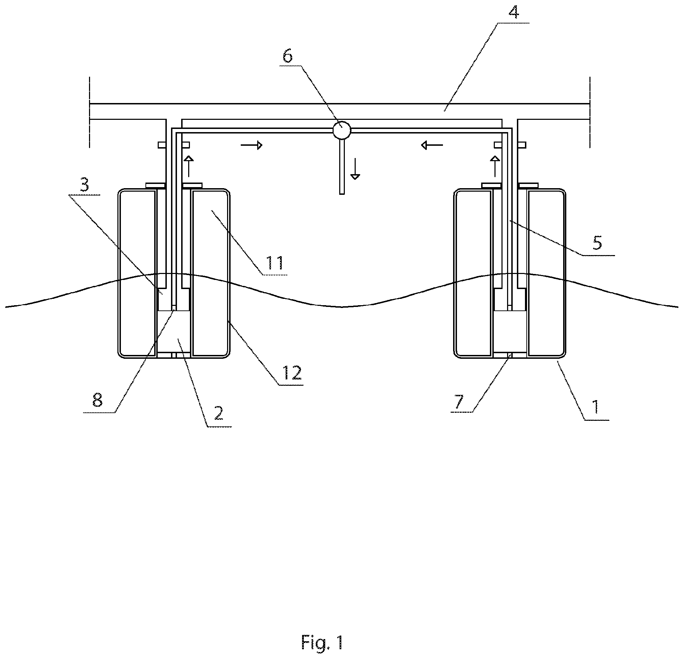

The exemplary embodiment of the modular platform to hold offshore constructions with structure stabilization mechanism and recovery of water wave energy (Fig. 1) envisages the specific structure of the buoyancy elements (1) composed of the internal core made of extruded polystyrene XPS (11) and an external coat of high performance concrete (12) connected to the horizontal structure (4) dedicated for fixing offshore construction thereon with a structural element, i.e. piston (3). Fixed to the horizontal structure (4) in the space above the water table is a water turbine (6) which receives the water pumped from the vertical hollows (2).

### Exemplary embodiment II

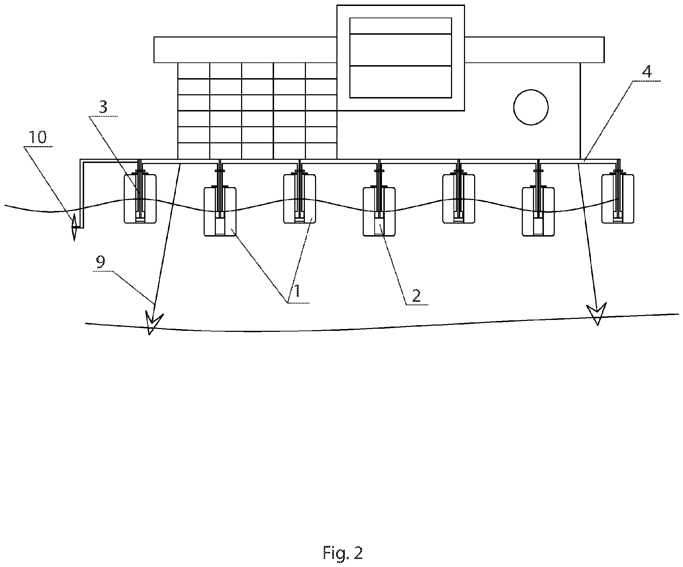

The exemplary embodiment of the modular platform to hold offshore constructions with structure stabilization mechanism and recovery of water wave energy (Fig.2) envisages the specific structure of the floating platform composed of buoyancy elements (1) connected to the horizontal structure (4) and floating up and down with the water wave movement, thus causing compression of water which fills the chamber of the float (2) and transport of the water through the hollow (5) to the receiving device in the form of a water turbine (6) and then to the device which converts the energy to electrical energy. The modular platform is anchored to the seabed with a rope (9) and fitted with a drive (10) which makes it possible to move on the water basin.

### Exemplary embodiment III

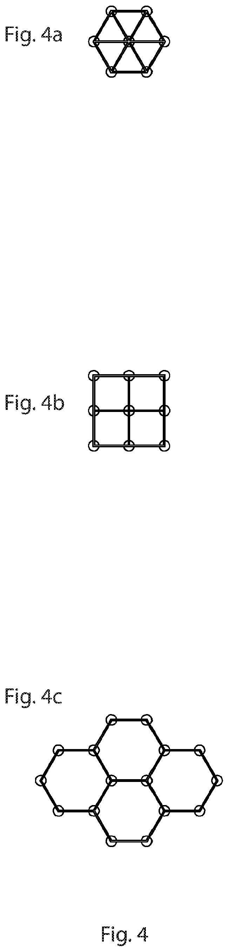

The exemplary embodiment of the modular platform to hold offshore constructions with structure stabilization mechanism and recovery of water wave energy (Fig.4) envisages a specific structure of the floating platform, composed of buoyancy elements (1) connected to the horizontal structure (4) and geometrically configured in the shape of a triangle (Fig.4a), rectangular (Fig.4b) or hexagon. (Fig.4c).

## Claims

1. A modular platform for offshore constructions, composed of more than two separate buoyancy elements (1) partially immersed in water, which move along with the water wave movement and which, in the part above the water level, are connected to a structural element-platform (4) forming a rigid horizontal spatial structure, wherein each buoyancy element (1) is given the shape of a cuboid or cylinder having at least one vertical hollow (2) which in the bottom part water gets inside through a one-way valve (7) in a one-way and free flow and the top part of the vertical hollow is used to anchor a structural element-piston (3) which forms the axis along which the buoyancy element (1) moves and which is connected to the horizontal structural element-platform (4) fitted to take external loads above the water and the structural element-piston (3) is fitted with at least one hollow (5) for the transport of compressed water between the vertical hollow (2) of the buoyancy element (1) and the water receiving element i.e. water turbine (6), which is a part of the platform stabilization system and the system of producing electrical energy from the pumped water.

2. Modular platform according to Claim 1, **characterized in that** it is fitted with a water turbine device (6) which converts the energy of the water pumped from the buoyancy element to electrical energy.

3. Modular platform according to Claim 1, **characterized in that** the hollow (5) in the structural element -piston (3) is fitted with a valve (valves) (8) which enables setting an open flow of water at specific pressure and a change of its direction.

4. Modular platform according to Claim 1, **characterized in that** it is assembled by launching individual buoyancy elements (1) and connecting then to form a larger spatial structure.

5. Modular platform according to Claim 1, **characterized in that** the horizontal structural elements (4) are geometrically configured in the horizontal plane to form a triangle, rectangle, or hexagon.

6. Modular platform according to Claim 1, **characterized in that** the buoyancy element (1) of a launched platform can be replaced with a new element without the need to disassemble the entire platform.

7. Modular platform according to Claim 1, **characterized in that** the existing platform can be added extra buoyancy elements (1) to adjust the platform size to the current demand.

8. Modular platform according to Claim 1, **characterized in that** it can be fitted with elements (9) anchoring it to the seabed, embankment members, or other floating objects.

9. Modular platform according to Claim 1, **characterized in that** it can be equipped with a drive (10) which enables moving of the entire platform.

10. Modular platform according to Claim 1, **characterized in that** the buoyancy element has an internal layer of a high-density foam material (11), such as extruded polystyrene, and an external coat of a non-absorbing material (12), e.g. high performance concrete reinforced with fibers or textiles.

11. Modular platform according to Claim 1, **characterized in that** the spacing between the centerlines of the buoyancy elements (1) is larger than twice their diameter or the length of their longest side.

12. Modular platform according to Claim 1, **characterized in that** the heights and widths of the buoyancy elements (1) and their spacing in the structural nodes are selected to match the maximum heights and lengths of the waves which form on the specific basin so as to ensure even distribution of loan in the nodes between the buoyancy elements (1) floating on wave crests, where the height of the buoyancy element is larger than the theoretical maximum wave height.

## Patentansprüche

1. Modulare Überbauplattform bestehend aus mehr als zwei unabhängigen Verdrängungselementen (1) teilweise in Wasser eingetaucht, sich gemäß der Wellenbewegung des Wassers bewegend und oberhalb des Wasserspiegels mit dem Strukturelement der Plattform (4) verbunden, das eine starre horizontale Raumstruktur bildet, **dadurch gekennzeichnet, dass** jedes Verdrängungselement (1) einen Quader oder Zylinder mit mindestens einem vertikalen Hohlraum (2) bildet, der im unteren Teil einen einseitigen freien Wasserdurchfluss durch das Rückschlagventil (7) ermöglicht und im oberen Teil des vertikalen Hohlraums ein Strukturelement - Kolben (3), der die Achse ist, auf der sich das Verdrängungselement bewegt (1) und der mit dem horizontalen Strukturelement der Plattform (4) verbunden ist, das zur Aufnahme der äußeren Wasser-Flächenlasten geeignet ist und dessen und des Strukturelements - Kolben (3) mindestens einen Hohlraum (5) aufweist, der den Transport von Druckwasser zwischen dem vertikalen Hohlraum (2) des Verdrängungselements (1) und dem Aufnahmeelement in Form einer Wasserturbine (6) ermöglicht, die ein Teil des Plattformstabilisierungssystems und des Pumpwasserkraftwerks ist.

2. Modulare Plattform gem. dem Patentanspruch Nr. 1, **gekennzeichnet durch** die Tatsache, dass sie eine Wasserturbine (6) aufweist, die die Energie des gepumpten Wassers aus dem Verdrängungselement in elektrische Energie umwandelt.

3. Modulare Plattform gem. dem Patentanspruch Nr. 1, **dadurch gekennzeichnet, dass** der Hohlraum (5) im Strukturelement - Kolben (3) ein Ventil (Ventile) (8) aufweist, das es ermöglicht, die Öffnung des Wasserstroms auf einen bestimmten Druck einzustellen und seine Richtung zu ändern.

4. Modulare Plattform gem. dem Patentanspruch Nr. 1, **dadurch gekennzeichnet, dass** der Zusammenbau darin besteht, einzelne Verdrängungselemente (1) zu starten und sie zu einer größeren räumlichen Struktur zu kombinieren.

5. Modulare Plattform gem. dem Patentanspruch Nr. 1, **dadurch gekennzeichnet, dass** die horizontalen Strukturelemente (4) in der horizontalen Ebene dreieckige, vierseitige oder sechseckige Systeme bilden.

6. Modulare Plattform gem. dem Patentanspruch Nr. 1, **dadurch gekennzeichnet, dass** das Verdrängungselement (1) in einer wasserbasierten Plattform durch ein neues Element ersetzt werden kann, ohne dass die gesamte Plattform demontiert werden muss.

7. Modulare Plattform gem. dem Patentanspruch Nr. 1, **dadurch gekennzeichnet, dass** die Verdrängungselemente (1) können der bestehenden Plattform durch Anpassung ihrer Größe an den aktuellen Bedarf hinzugefügt werden.

8. Modulare Plattform gem. dem Patentanspruch Nr. 1, **dadurch gekennzeichnet, dass** Verankerungen (9) am Meeresboden, an Kaikonstruktionen oder anderen schwimmenden Objekten aufweisen kann.

9. Modulare Plattform gem. dem Patentanspruch Nr. 1, **dadurch gekennzeichnet, dass** sie einen Antrieb (10) aufweisen kann, der die Bewegung der gesamten Plattform ermöglicht.

10. Modulare Plattform gem. dem Patentanspruch Nr. 1, **dadurch gekennzeichnet, dass** das Verdrängungselement eine Innenschicht aus hochdichtem Schaumstoff (11), z.B. extrudiertem Polystyrol, und eine Außenschicht aus nicht absorbierendem Material (12), z.B. aus hochwertigem, mit Fasern oder Geweben verstärktem Beton, aufweist.

11. Modulare Plattform gem. dem Patentanspruch Nr. 1, **dadurch gekennzeichnet, dass** der axiale Abstand der Verdrängungselemente (1) größer ist als ihr doppelter Durchmesser oder die Länge ihrer größten Seite.

12. Modulare Plattform gem. dem Patentanspruch Nr. 1, **dadurch gekennzeichnet, dass** die Höhe und Breite der Verdrängungselemente (1) und ihr Abstand in den Konstruktionsknoten auf die maximalen Höhen und Wellenlängen, die in einem gegebenen Gewässer auftreten, gewählt wird, so dass es eine gleichmäßige Gewichtsverteilung in den Knoten zwischen den Verdrängungselementen (1) gibt, die auf den Wellenkämmen schwimmen, während die Höhe des Verdrängungselements größer ist als die theoretische Höhe der maximalen Welle.

## Revendications

1. Plate-forme modulaire pour constructions en mer, composée de plus de deux éléments de flottaison distincts (1) partiellement immergés dans l'eau, qui se déplacent avec le mouvement des vagues d'eau et qui, dans la partie au-dessus du niveau de l'eau, sont reliés à une plateforme élément de structure (4) formant une structure spatiale horizontale rigide, dans laquelle chaque élément de flottaison (1) a la forme d'un cuboïde ou d'un cylindre ayant au moins un creux vertical (2) qui, dans la partie inférieure, l'eau pénètre à travers une soupape unidirectionnelle (7) dans un écoulement libre et à sens unique et la partie supérieure du creux vertical est utilisée pour fixer un piston élément de structure (3) qui forme l'axe le long duquel se déplace l'élément de flottaison (1) et qui est relié à la plateforme élément de structure horizontale (4) montée pour supporter des charges externes au-dessus de l'eau et l'élément piston structurel (3) est équipé d'au moins un creux (5) pour le transport de l'eau comprimée entre le creux vertical (2) de l'élément de flottaison (1) et l'élément récepteur d'eau c.-à-d. la turbine hydraulique (6), qui fait partie du système de stabilisation de la plateforme et du système de production d'énergie électrique à partir de l'eau pompée.

2. Plateforme modulaire selon la revendication 1, **caractérisée en ce qu'**elle est équipée d'un dispositif de turbine à eau (6) qui convertit l'énergie de l'eau pompée de l'élément de flottaison en énergie électrique.

3. Plateforme modulaire selon la revendication 1, **caractérisée en ce que** le creux (5) de la structure élément piston (3) est équipé d'une vanne (vannes) (8) qui permet de régler un débit d'eau ouvert à une pression spécifique et un changement de sa direction.

4. Plateforme modulaire selon la revendication 1, **caractérisée en ce qu'**elle est assemblée en lançant des éléments de flottaison individuels (1) et en les reliant ensuite pour former une structure spatiale plus grande.

5. Plateforme modulaire selon la revendication 1, **caractérisée en ce que** les éléments structurels horizontaux (4) sont configurés géométriquement dans le plan horizontal pour former un triangle, un rectangle ou un hexagone.

6. Plateforme modulaire selon la revendication 1, **caractérisée en ce que** l'élément de flottaison (1) d'une plateforme lancée peut être remplacé par un nouvel élément sans devoir démonter la plateforme entière.

7. Plateforme modulaire selon la revendication 1, **caractérisée en ce que** la plateforme existante peut être complétée par des éléments de flottaison supplémentaires (1) pour adapter la taille de la plateforme à la demande actuelle.

8. Plateforme modulaire selon la revendication 1, **caractérisée en ce qu'**elle peut être équipée d'éléments (9) l'ancrant aux fonds marins, aux éléments de la berge ou autres objets flottants.

9. Plateforme modulaire selon la revendication 1, **caractérisée en ce qu'**elle peut être équipée d'un entraînement (10) qui permet de déplacer l'ensemble de la plateforme.

10. Plateforme modulaire selon la revendication 1, **caractérisée en ce que** l'élément de flottaison présente une couche interne d'un matériau en mousse haute densité (11), tel que le polystyrène extrudé, et une couche externe en un matériau non absorbant (12), par exemple du béton haute performance renforcé par des fibres ou des textiles.

11. Plateforme modulaire selon la revendication 1, **caractérisée en ce que** l'espacement entre les axes des éléments de flottaison (1) est supérieur au double de leur diamètre ou de la longueur de leur plus grand côté.

12. Plateforme modulaire selon la revendication 1, **caractérisée en ce que** les hauteurs et largeurs des éléments de flottaison (1) et leur espacement dans les nœuds structurels sont choisis pour correspondre aux hauteurs et longueurs maximales des vagues qui se forment sur le bassin spécifique afin d'assurer une répartition uniforme de la charge sur les nœuds entre les éléments de flottaison (1) flottant sur les crêtes des vagues, où la hauteur des éléments de flottaison est supérieure à la hauteur maximale théorique des vagues.
